## Europäisches Patentamt

## European Patent Office

## Office européen des brevets

(19)

(11) Veröffentlichungsnummer: **0 297 321**
**B1**

(12) **EUROPÄISCHE PATENTSCHRIFT**

(45) Veröffentlichungstag der Patentschrift:
16.08.90

(51) Int. Cl.⁵: **B64C 11/16**

(21) Anmeldenummer: 88109182.1

(22) Anmeldetag: 09.06.88

(54) Propeller, dessen Blätter mit einem Vorflügel versehen sind.

(30) Priorität: 27.06.87 DE 3721295

(73) Patentinhaber: Deutsche Forschungsanstalt für Luft- und Raumfahrt e.V., Linder Höhe Postfach 90 60 58, D-5000 Köln 90(DE)

(43) Veröffentlichungstag der Anmeldung:
04.01.89 Patentblatt 89/1

(72) Erfinder: Kallergis, Michael, Dipl.-Ing., Donnerburgweg 43, D-3300 Braunschweig(DE)

(45) Bekanntmachung des Hinweises auf die Patenterteilung:
16.08.90 Patentblatt 90/33

(74) Vertreter: Gralfs, Harro, Dipl.-Ing., Am Bürgerpark 8, D-3300 Braunschweig(DE)

(84) Benannte Vertragsstaaten:
FR GB IT

(56) Entgegenhaltungen:
GB-A- 460 513
GB-A- 735 111

ACTORUM AG

## Beschreibung

Die Erfindung bezieht sich auf einen Propeller, dessen Blätter mit einem starr mit dem Propellerblatt verbundenen Vorflügel versehen sind, dessen Außenradius kleiner ist als der Blattradius.

Bei bekannten Propellern (CH-PS 235 700, GB-PS 460 513) sind die Vorflügel vorgesehen, um Strömungsablösungen im Stand und während des Starts zu unterdrücken. Um im Reiseflug den Wirkungsgrad nicht zu verschlechtern, ist es bekannt, derartige Vorflügel relativ zum Hauptflügel verstellbar auszubilden (CH-PS 235 700). Es ist dabei weiter bekannt, daß eine verhältnismäßig geringe radiale Ausdehnung des Vorflügels über den inneren Teil der Propellerblätter genügt, um eine wesentliche Verbesserung des Stand- und Startschubes zu bewirken, da eine Strömungsablösung in diesem Fall im allgemeinen nur an den inneren Abschnitten der Propellerblätter auftritt.

Der von einem Propeller erzeugte Schub resultiert auf das einzelne Propellerblatt bezogen aus dem Propellerblattgrundriß, dem Staudruck und dem Auftriebsbeiwert. Bei optimiertem Auftriebsbeiwert werden zur Erzielung hohen Schubs hohe Drehzahlen und große Propellerdurchmesser verwendet. Bei Geschäftsreise- und Sportflugzeugen ergeben sich hierbei unter den üblichen Betriebsbedingungen helikale Blattspitzen-Machzahlen oberhalb $M_h = 0,7$. Propeller mit Blattspitzen-Machzahlen in diesem Bereich führen insbesondere während der Startphase zusätzlich zu der wegen der hohen Startleistung lauten Motorengeräusche auch zu einem intensiven Propellerschall.

Der Propellerschall als Hauptursache des Fluglärms kann durch eine Herabsetzung der helikalen Blattspitzen-Machzahl herabgesetzt werden. Hierbei ist es allerdings erforderlich, daß der Schub erhalten bleibt.

Um diese Voraussetzungen zu erfüllen, ist es bekannt, den Propellerschall bei Flugzeugen der allgemeinen Luftfahrt durch Verringerung der Drehzahl zu mindern (B. Berdrow, "Leiser Antrieb für die allgemeine Luftfahrt", Bonn: BMFT, Abschlußbericht 1976). Zur Erhaltung des Schubes bedingt dieses jedoch eine Durchmesservergrößerung des Propellers und die Verwendung von Untersetzungsgetrieben. Ein größerer Propellerdurchmesser erfordert darüber hinaus in vielen Fällen zur Einhaltung der erforderlichen Bodenfreiheit für den Propeller ein höheres Fahrwerk. Ein solches Fahrwerk führt zusammen mit dem notwendigen Übersetzungsgetriebe und dem größeren Propeller zu einer deutlichen Massenzunahme für das Flugzeug. Ein solcher Vorschlag ist damit kaum realisierbar.

Auch bei einem jüngeren Vorschlag (Z. "VDI-Nachrichten" Nr. 12, S. 42 / 20. März 1987) werden zur Verringerung der Lärmentwicklung größere und langsamere Propeller benutzt. Hier wird davon ausgegangen, daß in jedem Fall Getriebe vorhanden sind.

Eine Möglichkeit, einen vorgegebenen Schub eines Propellers bei gleicher Drehzahl, aber kleinerer Blattspitzen-Machzahl und damit mit geringerem Propellerschall zu erreichen, besteht darin, einen Propeller mit entsprechend kleinerem Durchmesser zu verwenden, dessen Blätter mit einem Vorflügel versehen sind.

Ausgehend von einem solchen Propeller ist es Aufgabe der Erfindung, diesen so auszugestalten, daß er keine nachteiligen Wirkungen erzeugt, insbesondere aerodynamisch stoßfrei und ohne Schubeinbuße arbeitet.

Diese Aufgabe wird gemäß der Erfindung dadurch gelöst, daß die Vorflügelspitzen auf einem Durchmesser gemäß der Formel

$$D_i = \frac{\sqrt{(JUTG)^2 \cdot a_o - v_\infty^2}}{\pi \cdot n}$$

liegen, worin

JUTG = jeweilige Machzahl entsprechend der unteren Transonic-Grenze der Blattkonfiguration einschließlich Vorflügel
$a_o$ = Schallgeschwindigkeit der Luft
$v_\infty$ = Fluggeschwindigkeit
$n$ = Propellerdrehzahl.

Im allgemeinen wird man den Außendurchmesser der Vorflügelspitzen nach folgender Formel festlegen können

$$D_i = \frac{\sqrt{(0,65 \cdot a_o)^2 - v_\infty^2}}{\pi \cdot n}$$

Propeller der genannten Art können mit beliebiger Blattzahl und sowohl als Festpropeller als auch als

2

Verstellpropeller ausgebildet sein. Weiter können solche Propeller paarweise kleinere Blattspitzendurchmesser besitzen.

Die Erfindung ist in der Zeichnung beispielsweise veranschaulicht und im nachstehenden im einzelnen anhand der Zeichnung beschrieben. In der Zeichnung zeigt

Fig. 1 eine Ansicht eines Propellerblattes mit Vorflügel in Draufsicht.

Fig. 2 in einem Diagramm die Abhängigkeit des Gesamtschallpegels von der helikalen Blattspitzen-Machzahl.

Fig. 3 in einem Diagramm den Zusammenhang zwischen $c_A$-Wert und Anstellwinkel.

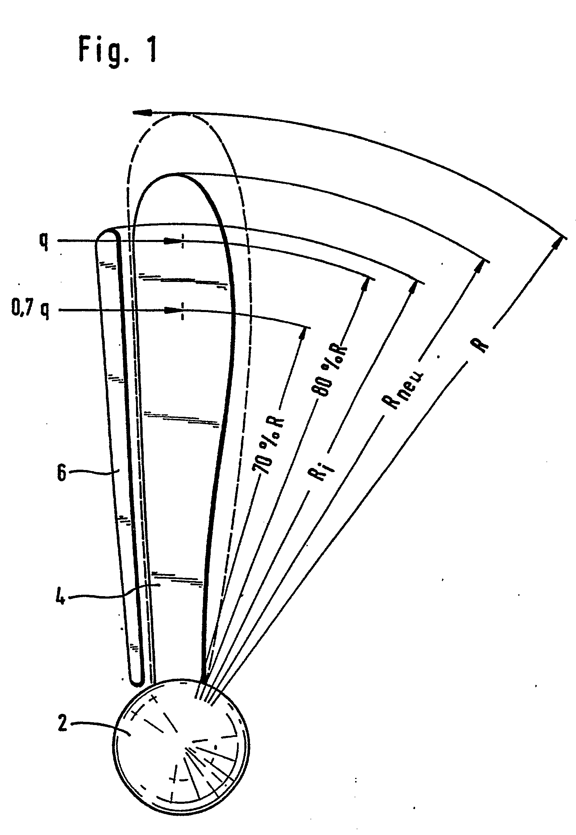

In Fig. 1 ist von einem Propeller, der zwei oder mehr Propellerblätter aufweisen kann, die Propellernabe 2 und ein Propellerblatt 4 dargestellt. Das Propellerblatt 4 ist mit einem fest daran angeordneten Vorflügel 6 versehen. Gestrichelt ist weiter ein einfaches Propellerblatt dargestellt, das für gleichen Staudruck q ausgelegt ist. Beide Propeller sind für den Betrieb mit gleicher Drehzahl n ausgelegt, beispiels-weise n = 2600 l/min.

Die resultierenden Kräfte aller parallel und senkrecht zur Anströmung auf einem Tragflügel wirkenden Druck- und Schubspannungen ergeben Widerstand und Auftrieb. Auftrieb und Widerstand werden mit Hilfe der entsprechenden Beiwerte $c_A$ und $c_W$ durch

$A = c_A\, q_\infty\, l\, b$ und $W = c_W\, q_\infty\, l\, b$,

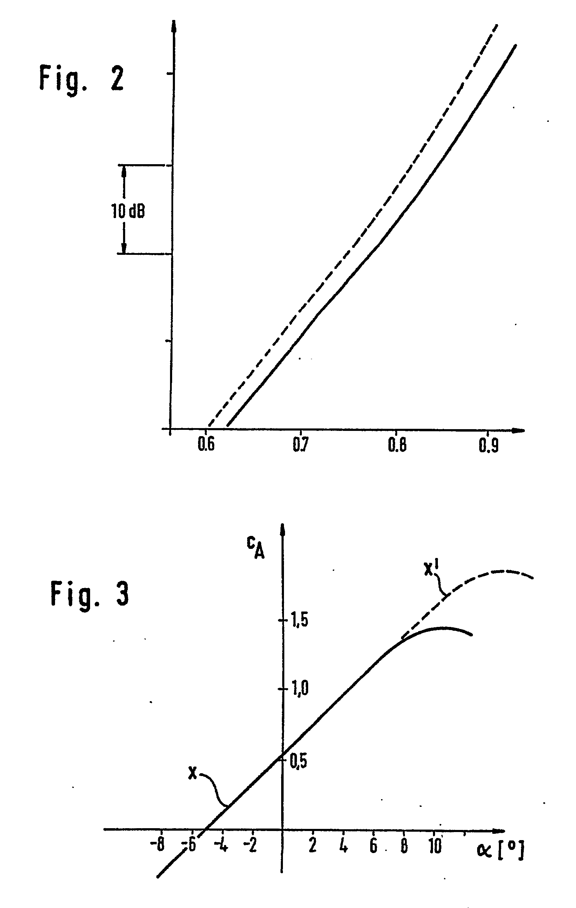

mit A dem Auftrieb, W dem Widerstand, b der Flügellänge, l der Flügelbreite und q dem Staudruck bestimmt. Der Auftriebsbeiwert hängt außer von der Wölbung in starkem Maße vom Anstellwinkel ab. Mit steigendem Anstellwinkel steigt der Auftriebsbeiwert linear bis zum Maximalwert $c_{Amax}$ und fällt bei einer weiteren Steigerung des $\alpha$-Winkels wegen der einsetzenden Strömungsablösung auf der Profilsaugseite abrupt ab, wie in Fig. 3 dargestellt.

Auf ein Propellerblatt bezogen resultieren der Schub - wie der Auftrieb eines Profils - aus dem Blattgrundriß, dem Staudruck und dem Auftriebsbeiwert. Auftriebsbeiwerte moderner Propellerblätter liegen bei $c_A$ = 1,1 bis 1,5. Somit werden zur Erzielung hohen Schubs hohe Drehzahlen - für hohen Staudruck - und große Propellerdurchmesser verwendet.

Es ist bekannt, daß die maßgebliche Einflußgröße für das Propellergeräusch die Absolutgeschwindig-keit

$$W = \sqrt{v_\infty^2 + u^2}$$

der Blattspitze bzw. die helikale Blattspitzen-Machzahl ist. Sie ergibt sich aus

$$M_h = 1/a_o \cdot \sqrt{v_\infty^2 + (\pi D n)^2}$$

mit $a_o$ der Schallgeschwindigkeit der Luft, $v_\infty$ der Fluggeschwindigkeit, D dem Propellerdurchmesser und n der Drehzahl.

. In Fig. 2 sind die gesamten Propellerdrehgeräusche, d.h. der A-bewertete Gesamtschallpegel, in dB über der helikalen Blattspitzen-Machzahl $M_h$ aufgetragen, gemessen in der Drehebene des Propellers für ein dickes Profil (gestrichelte Linie) und für ein dünnes Profil (volle Linie). Aus diesem Diagramm geht hervor, daß eine Verringerung der Blattspitzen-Machzahl eines Propellers zu einer überproportionalen Verringerung des Gesamtschallpegels des Propellers führt.

Durch Anordnung eines Vorflügels mit Spalt, wie er in Fig. 1 dargestellt ist, wird der Ablösevorgang der Strömung auf der Profiloberseite auf einen größeren Anstellwinkel gegenüber der Ausführung ohne Vorflügel hinausgezögert. Zuführung von Energie durch den Spalt verschiebt die Ablöseblase weiter stromabwärts, wodurch die Differenz zwischen Unter- und Überdruck vergrößert wird. Dadurch verlängert sich die $c_A(\alpha)$-Kurve - Fig. 3 - zu höheren $c_A$-Werten. Es wird gemäß der Gleichung für den Auftrieb eine Verkleinerung des Flügelgrundrisses durch Vergrößerung des $c_A$-Wertes zur Aufrecht-erhaltung des Schubs kompensiert.

Bei einem Propeller mit einem Propellerblatt, wie es in Fig. 1 gestrichelt dargestellt ist, mit einer Dreh-zahl n = 2600 l/min, einem Durchmesser d = 2 m betrage bei einer Fluggeschwindigkeit von 60 ms die heli-kale Blattspitzen-Machzahl $M_{hel}$ = 0,82. Es soll nun die Forderung gestellt werden, das Gesamtgeräusch um rund 12 dB zu reduzieren. Diese Forderung ist, wie aus Fig. 2 ersichtlich, erreichbar durch eine Reduzierung der helikalen Blattspitzen-Machzahl auf $M_{hel}$ = 0,74. Dies entspricht einer Durchmes-Durchmesserreduzierung um 10 % bei gleicher Drehzahl und Geschwindigkeit.

Die Nachrechnung der erforderlichen aerodynamischen Werte nach den vorgeschlagenen Änderungen bezieht sich auf ein übliches Propellerblatt, wobei alle Größen, die den Propeller mit Vorflügel betreffen, den Index "neu erhalten. Für die Abschätzung des Staudrucks kann mit der Vorstellung des Propellerblattes als rotierender Flügel vom Punkt bei 80% des Radius - Angriffspunkt des Gesamtschubs - ausgegangen werden. Wenn der Vorflügel sich über 95% des neuen (verkürzten) Radius erstreckt und der Schub wiederum bei etwa 80% des Vorflügelradius angreift, dann beträgt der neue Staudruck etwa 70% vom Staudruck der am Originalblatt wirkt. Auf den Originalradius bezogen beträgt der Vorflügelradius 85% und die Länge des Profils im Bereich des Vorflügels 90%.

Unter der Annahme, daß der Auftriebbeiwert des Originalblattes vorher $c_A = 1,4$ betragen hat, ergibt sich der neue erforderliche Wert zu $c_{Aneu} = 1,6 \cdot 1,4 \approx 2,2$. Auftriebsbeiwerte $c_A = 2,0$ unter Verwendung eines Vorflügels mit Spalt sind bereits in der Standardliteratur angegeben. Tatsächlich können mit Hilfe solcher Konstruktionen weit höhere $c_A$-Werte erreicht werden. Nun kann der Schub der Vorflügel-Konfiguration zu

$$S_{neu} = c_{Aneu} \cdot q_{neu} \cdot R_{neu} \cdot l_{neu} = 1,6 \cdot c_A \cdot 0,7 \cdot q \cdot 0,85 \cdot R \cdot 0,9 \cdot l = 0,85 \cdot S$$

ermittelt werden. Die restlichen 15% Schub können von der Blattspitze, über die sich der Vorflügel nicht erstreckt, erbracht werden.

**Patentansprüche**

1. Propeller, dessen Blätter mit einem starr mit dem Propellerblatt verbundenen Vorflügel versehen sind, dessen Außenradius kleiner ist als der Blattradius, dadurch gekennzeichnet, daß die Vorflügelspitzen auf einem Durchmesser gemäß der Formel

$$D_i = \frac{\sqrt{(JUTG)^2 \cdot a_O^2 - v_\infty^2}}{\pi \cdot n}$$

liegen, worin
JUTG = Jeweilige Machzahl entsprechend der unteren Transonic-Grenze der Blattkonfiguration einschließlich Vorflügel
$a_O$ = Schallgeschwindigkeit der Luft
$v_\infty$ = Fluggeschwindigkeit
n = Propellerdrehzahl.

2. Propeller nach Anspruch 1, dadurch gekennzeichnet, daß die Vorflügelspitzen auf einem Durchmesser gemäß der Formel

$$D_i = \frac{\sqrt{(0,65 \cdot a_O)^2 - v_\infty^2}}{\pi \cdot n}$$

liegen.

**Claims**

1. A propeller, the blades of which are provided with a slit which is rigidly connected to the propeller blade and the outer radius of which is smaller than the blade radius, characterised in that the tips of the slats lie on a diameter in accordance with the formula

$$D_i = \frac{\sqrt{(JUTG)^2 \cdot a_O^2 - v_\infty^2}}{\pi \cdot n}$$

in which

JUTG = particular Mach number corresponding to the lower transonic limit of the blade configuration including slats
$a_0$ = speed of sound in air
$V_\infty$ = airspeed
n = speed of rotation of the propeller.

2. A propeller according to Claim 1, characterised in that the tips of the slats lie on a diameter according to the formula

$$D_i = \frac{\sqrt{(0,65 \cdot a_0)^2 - v_\infty^2}}{\pi \cdot n}$$

## Revendications

1. Hélice avec pales dotées d'un volet fixe de bord d'attaque relié à la pale de l'hélice, volet dont le rayon extérieur est plus petit que le rayon de la pale, caractérisée en ce que les extrémités des volets de bord d'attaque se situent sur un diamètre déterminé par la formule:

$$D_i = \frac{\sqrt{(JUTG)^2 \cdot a_0^2 - v_\infty^2}}{\pi \cdot n}$$

dans laquelle:
JUTG = nombre de Mach respectif correspondant à la limite transsonique inférieure de la configuration de la pale, volet de bord d'attaque inclus
$a_0$ = vitesse du son de l'air
$V_\infty$ = vitesse de vol
n = nombre de tours de l'hélice

2. Hélice selon la revendication 1, caractérisée en ce que les extrémités des volets de bord d'attaque se situent sur un diamètre déterminé par la formule:

$$D_i = \frac{\sqrt{(0,65 \cdot a_0)^2 - v_\infty^2}}{\pi \cdot n}$$

# Fig. 1

Fig. 2

10 dB

0.6    0.7    0.8    0.9

Fig. 3

$c_A$

X'

1,5

1,0

0,5

X

-8  -6  -4  -2    2  4  6  8  10   $\alpha$ [°]